(19) Europäisches Patentamt
European Patent Office
Office européen des brevets

(11) Veröffentlichungsnummer: **0 093 957**
**B1**

(12) # EUROPÄISCHE PATENTSCHRIFT

(45) Veröffentlichungstag der Patentschrift: **30.10.85**

(51) Int. Cl.⁴: **C 04 B 41/63**

(21) Anmeldenummer: **83104141.3**

(22) Anmeldetag: **28.04.83**

(54) **Verfahren zur Verzögerung der Carbonatisation von Stahlbeton.**

(30) Priorität: **06.05.82 DE 3216967**

(43) Veröffentlichungstag der Anmeldung: **16.11.83 Patentblatt 83/46**

(45) Bekanntmachung des Hinweises auf die Patenterteilung: **30.10.85 Patentblatt 85/44**

(84) Benannte Vertragsstaaten: **AT BE CH DE FR GB IT LI NL SE**

(56) Entgegenhaltungen:
**DE-A- 2 735 665**
**DE-B- 1 066 125**
**DE-B- 1 223 291**
**DK-B- 133 501**
**US-A- 4 109 033**
**Zeitschrift "defazet" 31, Heft 9 (1977), S. 353-359**

(73) Patentinhaber: **BASF Farben + Fasern Aktiengesellschaft**
**Am Neumarkt 30**
**D-2000 Hamburg 70 (DE)**

(72) Erfinder: **Augustin, Friedrich**
**Lindenbuschweg 101**
**D-5020 Frechen (DE)**

(74) Vertreter: **Habbel, Hans-Georg, Dipl.-Ing.**
**Postfach 3429 Am Kanonengraben 11**
**D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 093 957 B1

Jouve, 18, rue St-Denis, 75001 Paris, France

**Beschreibung**

Die Erfindung betrifft ein Verfahren zur Verzögerung der Carbonatisation von Stahlbeton durch Aufbringung einer Überzugsmasse auf der Basis von Acrylatpolymerisaten, die zu einem Überzug mit einem hohen Diffusionswiderstand für Kohlendioxid aushärtet, auf die Oberfläche des Stahlbetons.

Bei der Ausführung von Bauwerken unter Verwendung von Stahlbeton ist es für die Erhaltung der statischen Sicherheit der Bauwerke erforderlich, eine Korrosion des eingelegten Bewehrungsstahls zu verhindern. Dieser Korrosionsschutz des Stahls wird zunächst durch das alkalische Milieu des umgebenden Zementsteins bewirkt. Bei der Aushärtung von Beton entsteht nämlich je nach Art des verwendeten Zements bis zu 25 % Calciumhydroxid, das teilweise gelöst im Porenwasser des Betons vorliegt und zu einem pH-Wert von etwa 12,5 führt. In diesem alkalischen Milieu wird der Bewehrungsstahl durch festhaftende Eisenoxidschichten passiviert und eine weitere Korrosion wird verhindert.

Der geschilderte Korrosionsschutz ist jedoch nicht dauerhaft, da im Laufe der Zeit unter dem Einfluß saurer Gase, insbesondere des in der Luft enthaltenden Kohlendioxids, eine Absenkung des pH-Werts, d. h. eine Neutralisation eintritt. Diese Neutralisation beginnt an der Oberfläche des Betons und setzt sich in das Innere fort, wobei die Geschwindigkeit des Vorgangs, der auch als Carbonatisation bezeichnet wird, im wesentlichen von der Diffusionsgeschwindigkeit der sauren Gase im Beton abhängt.

Zur Vermeidung frühzeitiger Korrosionsschäden durch die Carbonatisation der Betons schreiben die einschlägigen Normen eine Mindestüberdeckung des Bewehrungsstahls mit Beton von 10 bis 40 mm vor je nach Stahlstabdurchmesser und Standort des Bauwerks. In der Praxis hat sich jedoch gezeigt, daß die vorgeschriebenen Mindestwerte der Betonüberdeckung nicht immer eingehalten werden.

Es ist nun bekannt, die Carbonatisation durch aufbringen von Polymerbeschichtungen, z. B. auf der Basis von Acrylatpolymerisaten, durch die der Diffusionswiderstand für Kohlendioxid erhöht wird, zu verzögern (Engelfried, R., defazet (Deutsche Farben-Zeitschrift) 31, Heft 9 (1977) S. 353-359).

Der Diffusionswiderstand eines porigen Werkstoffs gegenüber einem Gas kann durch die dimensionslose Diffusionswiderstandszahl $\mu$ beschrieben werden, die angibt, wievielmal undurchlässiger für ein permeierendes Gas eine permeierte Schicht gegenüber Luft unter gleichen Bedingungen ist. Der Diffusionswiderstand W einer Schicht der Dicke s ergibt sich als $W = \mu.s$. Dieser Wert, der die Dimension einer Längeneinheit hat, kann als gleichwertige Luftschichtdicke bezeichnet werden, d. h. er gibt an, welche Luftschichtdicke ebenso undurchlässig für das diffundierende Gas ist wie der geprüfte Stoff in der bei der Prüfung vorliegenden Schichtdicke.

Die o. g. Veröffentlichung von Engelfried zeigt nun, daß Chlorkautschuk-Lösungen, die gegenüber Kohlendioxid dichtesten Überzüge liefern, gefolgt von Acrylatlösungen und Epoxid-Dispersionen. Die Veröffentlichung zeigt, daß Dispersionsbeschichtungen auf Basis von Acrylatcopolymerisaten sehr geringe Diffusionswiderstandszahlen aufweisen und praktisch als carbonatisationshemmende Beschichtungen ungeeignet sind. Neben den Chlorkautschuk-, Acrylat-, und Epoxidbeschichtungen sind weiterhin Beschichtungen auf der Basis von Polyurethanharzen geeignet. Zusammenfassend kann festgestellt werden, daß bisher lösungsmittelhaltige und lösungsmittelfreie Beschichtungsmassen der obengenannten Art auf der Basis von Einkomponenten- oder Zweikomponentenbindemitteln als Carbonatisationsschutz auf Stahlbeton eingesetzt wurden, wasserverdünnbare Dispersionsbeschichtungsmassen auf der Basis von Polyacrylaten und ähnlichen Polymerisaten jedoch für diesen Zweck grundsätzlich abgelehnt wurden.

Die bisher verwendeten Beschichtungen bringen jedoch den Nachteil mit sich, daß sie nicht nur gegenüber Kohlendioxid sehr dicht sind, sondern auch einen hohen Wasserdampfdiffusionswiderstand aufweisen. Dies ist deshalb ungünstig, weil durch derartige Beschichtungen eine Diffusion von Wasserdampf aus dem Beton heraus behindert wird. Engelfried führt dazu aus, daß bei der Auswahl von Beschichtungsmassen in Bezug auf die notwendige Wasserdampfdiffusion in umgekehrter Richtung und andere bauphysikalische Erfordernisse gegebenenfalls Prioritäten zu setzen sind, d. h. daß unter Umständen im Hinblick auf Kohlendioxid- und Wasserdampfdiffusionswiderstand ein Kompromiß gewählt werden muß.

Es ist Aufgabe der Erfindung, die beschriebenen Nachteile des Standes der Technik zu vermeiden und ein Verfahren zur Herstellung einer carbonatisationshemmenden Beschichtung auf Stahlbeton anzugeben, bei dem ein hoher Kohlendioxidwiderstand und gleichzeitig eine gute Wasserdampfdurchlässigkeit erreicht werden.

Überraschenderweise wurde nun gefunden, daß bei Verwendung spezieller wäßriger Acrylatdispersionen diese Aufgabe gelöst wird.

Gegenstand der Erfindung ist daher ein Verfahren der eingangs genannten Art, daß dadurch gekennzeichnet ist, daß eine Überzugsmasse aufgebracht wird, die als Bindemittel

A) eine 20 bis 70 %ige wäßrige Dispersion eines Copolymerisats A einer Glastemperatur von 0 bis 50 °C aus

a) Methacrylsäuremethylester, Styrol, Vinylacetat, tert.-Butylacrylat und/oder Vinylchlorid und gegebenenfalls zusätzlich Acrylnitril und

b) (Meth)acrylsäureestern 2 bis 8 C-Atome enthaltender Alkanole und/oder Vinylpropionat, die

c) 0,5-10 % ihres Gewichtes an 3 bis 5 C-Atome enthaltenden Mono- und/oder Dicarbonsäuren

und/oder deren gegebenenfalls an den Stickstoffatomen durch 1 bis 4 C-Atome enthaltende Alkyl- und/oder Alkylolreste substituierte Amide und

d) 0,5-10 % ihres Gewichts an Carbonylgruppen aufweisenden Monomeren einpolymerisiert enthalten,

B) je Mol in den Copolymerisaten A enthaltenden Carbonylgruppen 0,05-1 Mol wasserlösliche aliphatische Dihydrazin-Verbindungen und

C) je Mol Dihydrazin-Verbindung 0,000 2 bis 0,02 Mol wasserlösliche Zink-, Mangan-, Cobalt- und/oder Bleisalze enthält.

Die Aufbringung der Überzugsmasse erfolgt beispielsweise durch Streichen oder Rollen in einer Auftragsstärke, die Trockenfilmdicken von etwa 0,2 bis 0,4 mm ergibt. Die Anwendung des Verfahrens kann sowohl vorbeugend bei neuen Bauwerken als auch zur Sanierung und zur Verhinderung weiterer Schäden bei Bauwerken durchgeführt werden, bei denen bereits eine gewisse Carbonatisation vorliegt.

Die nach dem erfindungsgemäßen Verfahren auf Stahlbeton aufgebrachten Beschichtungen weisen, wie im folgenden noch anhand von Beispielen gezeigt wird, sehr hohe Werte des Diffusionswiderstandes für Kohlendioxid und sehr günstige Werte der Durchlässigkeit für Wasserdampf auf. Sie stellen daher eine wirksame Maßnahme zur Verzögerung bzw. praktisch zur Verhinderung der Carbonatisation des Betons dar und führen zu einem effektiven Korrosionsschutz des Bewehrungsstahls, wobei eine Beeinträchtigung des Wasserhaushalts des Bauwerks nicht eintritt. Dieser Befund war überraschend, da die Fachwelt bisher wäßrige Acrylatdispersionen als für den in Rede stehenden Zweck ungeeignet ansah.

Zwar sind aus der DE-A-28 19 092 Bindemittel, wie sie bei dem erfindungsgemäßen Verfahren verwendet werden, und deren Einsatz für Anstrichmittel und Buntsteinputze bekannt, doch legte dieser Stand der Technik die Erfindung nicht nahe, da er keinen Hinweis gibt, die bekannten Dispersionen als carbonatisationsverzögernde Korrosionsschutzbeschichtungen für Stahlbeton einzusetzen. Der DE-A 28 19 092 liegt vielmehr die Aufgabe zugrunde, Überzüge mit stark verminderter Neigung zum Weißanlaufen zu schaffen und als Vorteil der Beschichtungen wird eine erhöhte Haftung auf Untergründen aus Alkydharzen beschrieben. Angesichts des oben geschilderten Standes der Technik war also auch bei Kenntnis der in der DE-A 28 19 092 beschriebenen Anstrichmittel ein Vorurteil der Fachwelt zu überwinden, um zu der vorliegenden Erfindung zu gelangen.

Die wäßrigen Dispersionen des Copolymerisats A können in an sich üblicher Weise durch Copolymerisation der Monomeren in wäßriger Emulsion unter Verwendung der üblichen Emulgier- und Dispergierhilfsmittel hergestellt sein und haben meist eine Konzentration an Copolymerisat A von 40 bis 60 Gew.-%. Als Emulgier- und Dispergierhilfsmittel enthalten sie meist 0,2 bis 3 Gew.-%, bezogen auf die Menge des Copolymerisats A, anionische und/oder nichtionische Emulgatoren, wie Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, Alkalisalze von oxalkylierten $C_{12}$- bis $C_{24}$-Fettalkoholen und von oxalkylierten Alkylphenolen, sowie ferner oxethylierte Fettsäuren, Fettalkohole und/oder Fettamide, oxethylierte Alkylphenole, ferner Natriumsalze von Fettsäuren, wie Natriumstearat und Natriumoleat. Die Copolymerisate A haben eine Glastemperatur von 0 bis 50 °C, vorzugsweise von 15 bis 25 °C, und die Glastemperatur wird nach üblichen Methoden, z. B. aus der Messung des E-Moduls im Kriechversuch als Funktion der Temperatur oder mit der DTA (= Differentialthermoanalyse) bestimmt. Die Copolymerisate (A) enthalten als « harte » Comonomere (a) vorzugsweise Methacrylsäuremethylester oder Styrol, doch sind auch solche gut geeignet, die als Comonomere (a) Vinylacetat, tert.-Butylacrylat und/oder Vinylchlorid enthalten. Der Gehalt an Acrylnitril übersteigt im allgemeinen 20 % nicht und liegt meist zwischen 0 und 15, vorzugsweise zwischen 5 und 10 Gew.-%. Als Comonomere (b) enthalten die Copolymerisate A Vinylpropionat und/oder Ester aus 2 bis 8 C-Atome enthaltenden Alkanolen, wie Ethanol, Isopropylalkohol, n-Propanol, n-Butanol, Isobutanol oder 2-Ethylhexanol, und Acryl- und/oder Methacrylsäure einpolymerisiert. Von besonderem Interesse sind Acrylester von 2 bis 14 C-Atomen enthaltenden Alkanolen, wie besonders Ethylacrylat, n-Butylacrylat und Isobutylacrylat. Die Mengen der Comonomeren (a) und (b) werden so gewählt, daß die Glastemperatur des Copolymerisats A in dem oben angegebenen Bereich liegt. Als Comonomere (c) enthalten die Copolymerisate A 0,5 bis 10, vorzugsweise 1 bis 6 % ihres Gewichts an Acrylsäure, Methacrylsäure, Maleinsäure, Acrylamid, Methacrylamid, N-Methylacrylamid, N-Isobutylacrylamid, N-Methylmethacrylamid, N-Methylolacrylamid, N-Methylolmethacrylamid, N-Ethoxymethylacrylamid, N-Butoxymethylacrylamid oder N-Isopropoxymethacrylamid einpolymerisiert.

Charakteristisch für die Copolymerisate A ist ihr Gehalt von 0,5 bis 10 % ihres Gewichtes an einpolymerisierten, Carbonylgruppen aufweisenden Monomeren. Carbonylgruppen aufweisende Monomere im Sinne der Erfindung sind nicht z. B. Ester, wie Ethylacrylat oder Vinylacetat oder Amide, wie Acrylamid oder Carbonsäuren, wie Acrylsäure, sondern Monomere mit mindestens einer Aldo- oder Keto-Gruppe und einer polymerisierbaren Doppelbindung. Von besonderem Interesse sind Acrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxy-alkylpropanale der allgemeinen Formel (I)

(Siehe Scheme Seite 4 f.)

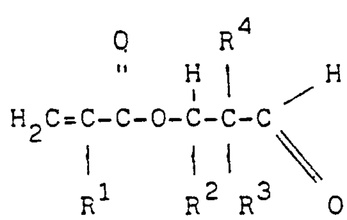

in der $R^1$ für —H oder —$CH_3$, $R^2$ für —H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können durch Veresterung von β-Hydroxyalkylpropanalen der allgemeinen Formel (II)

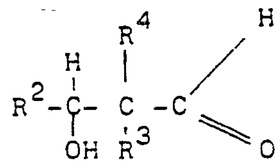

in der $R^2$, $R^3$ und $R^4$ die für die allgemeine Formel (I) angegebene Bedeutung haben, in Gegenwart von indifferenten Verbindungsmitteln sowie geringen Mengen Sulfonsäuren und Mineralsäuren bei Temperaturen von 40 bis 120, insbesondere von 60 bis 90 °C hergestellt sein. Als Ketogruppen tragende Monomere kommen ferner Diacetonacrylat, Acetonylacrylat, Diaceton(meth)acrylat, 2-Hydroxypropylacrylatacetylacetat und Butandiol-1,4-acrylatacetylacetat in Frage. Die Menge der Carbonyl- bzw. Ketogruppen aufweisenden einpolymerisierten Comonomeren (d) beträgt vorzugsweise 1 bis 5 Gew.-%, bezogen auf die Copolymerisate A.

Die Bindemittel enthalten je Mol der in den Copolymerisaten A enthaltenen Carbonyl- bzw. Ketogruppen 0,05 bis 1, vorzugsweise 0,4 bis 0,6 Mol wasserlösliche aliphatische Dihydrazin-Verbindungen. Geeignete Dihydrazin-Verbindungen B sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisende Dihydrazine, wie Ethylen-1,2-dihydrazin, Propylen-1,3-dihydrazin und Butylen-1,4-dihydrazin.

Als Komponente C enthalten die neuen Bindemittel je Mol Dihydrazin-Verbindung 0,000 2 bis 0,02, insbesondere 0,002 bis 0,01 Mol wasserlösliche Salze des Mangans, Cobalts, Bleis und/oder vorzugsweise Zinks. Als wasserlösliche Salze kommen vor allem die Acetate und Sulfate, sowie ferner die Nitrate und Nitrite in Frage ; Chloride werden dagegen im allgemeinen für die Bindemittel nicht gerne verwendet, da sie in manchen Fällen unerwünschte Nebenwirkungen aufweisen. In Frage kommen vor allem z. B. Zinksulfat, Mangan-II-sulfat, Cobalt-II-sulfat, die wasserlöslichen Acetate des Zinks, Mangans, Cobalts und Bleis, Bleinitrat, Cobaltnitrat, Mangan-II-nitrat sowie ferner Zinknitrit und Bleinitrit. Von den wasserlöslichen Salzen werden im allgemeinen die Sulfate und Acetate vorgezogen.

Die für das erfindungsgemäße Verfahren zu verwendenden Überzugsmassen enthalten vorteilhaft zusätzlich Pigmente und/oder Füllstoffe im Verhältnis des Pigmentvolumens und/oder Füllstoffvolumens zum Gesamtvolumen aller nicht flüchtigen Bestandteile der Überzugsmasse von 0,1 bis 40. Dieses Verhältnis wird als Pigmentvolumenkonzentration bezeichnet. Besonders bevorzugt werden Werte der Pigmentvolumenkonzentration von 15 bis 25.

Es wurde nämlich gefunden, daß die Pigmentvolumenkonzentration einen Einfluß auf die Durchlässigkeit der resultierenden Überzüge für Kohlendioxid hat. Die besten Ergebnisse bei gleichzeitig guter Deckkraft werden in dem bevorzugten Bereich erzielt. Bei einer Pigmentvolumenkonzentration oberhalb von 40 % wird keine ausreichende Diffusionssperre mehr erreicht, so daß derartige Beschichtungsmassen für den vorgesehenen Zweck ungeeignet sind. Es können auch pigmentfreie Überzugsmassen Überzugsmassen verwendet werden.

Vorteilhaft besitzen die Füllstoffe mindestens teilweise eine blättchenförmige Struktur. Es wurde nämlich gefunden, daß bei Verwendung derartiger Füllstoffe, beispielsweise Talkum oder Glimmer, eine besonders günstige Diffusionssperre erzielt wird. In einer bevorzugten Ausführungsform der Erfindung enthält die Überzugsmasse daher 0 bis 100 Gew.-% Pigmente und 100 bis 0 Gew.-% blättchenförmige Füllstoffe, bezogen auf die Summe der Pigmente und Füllstoffe.

Die Überzugsmassen enthalten vorteilhaft Entschäumer, Verdickungsmittel, Stabilisierungsmittel, Dispergierhilfsmittel und andere bekannte Hilfsstoffe, wobei die Feststoffsumme aller Hilfsstoffe 0,1 bis 1 Gew.-%, bezogen auf die Überzugsmasse, beträgt. Insbesondere Entschäumer wirken sich in der angegebenen Menge vorteilhaft aus, da sie die Ausbildung von Poren in den Überzügen verhindern. Höhere Gehalte an Hilfsstoffen sollten nicht gewählt werden, weil in dem Fall der Diffusionswiderstand für Kohlendioxid durch Ausbildung einer Porosität geringer wird. Zur Vermeidung von porösen Filmen sollte auch bei der Herstellung der Beschichtungsmasse möglichst keine Luft durch Rühr-, Misch- oder Dispergiergeräte in die Masse eingearbeitet werden, um die Entstehung von Schaum zu verhindern.

Es wurde weiterhin gefunden, daß auch die Teilchengröße des Copolymerisats A von Bedeutung ist. Vorteilhaft weist dieses eine durchschnittliche Teilchengröße von 0,1 bis 0,3 µm auf, wobei die Streuung der Teilchengröße möglichst klein sein sollte, da Beschichtungsmassen einheitlicher Teilchengröße des Copolymerisats A und auch der übrigen Feststoffe zu günstigeren Werten des Diffusionswiderstandes führen.

Durch die Erfindung werden neben dem hohen Kohlendioxiddiffusionswiderstand und der hohen Wasserdampfdurchlässigkeit folgende weitere Vorteile erzielt : Die verwendeten Beschichtungsmassen sind wasserverdünnbar, so daß Arbeitsgeräte leicht mit Wasser gereinigt werden können. Sie sind im Vergleich mit lösungsmittelhaltigen Produkten sehr umweltfreundlich. Die Beschichtungen weisen eine gute Haftung auf Beton auf und können auch auf feuchtem Beton hergestellt werden. Die Überzüge erweichen nicht durch Quellung, da ihre Wasseraufnahme sehr gering ist. Sie sind schlagregendicht. Gegenüber den bisher verwendeteten Beschichtungsmassen ergibt das erfindungsgemäße Verfahren elastische Überzüge mit größerer Schichtdicke. Hierdurch können Risse im Beton bis zu Rißbreiten von 0,3 mm und unter Umständen mehr überbrückt werden. Dies ist besonders wichtig, da gerade in Rißbereichen erhöhte Carbonatisation von Beton auftritt. Die erhaltenen Überzüge sind beständig gegenüber Alkalien, verdünnten Säuren und sauren Gasen und zeigen eine hohe Beständigkeit bei Langzeitbewitterung.

Im folgenden wird die Erfindung anhand von Ausführungsbeispielen näher erläutert.

Die in den folgenden Beispielen angegebenen Teile und Prozente beziehen sich, wenn nicht anders angegeben, auf das Gewicht.

Beispiel 1

a) Herstellung eines Bindemittels

In einem Wittschen Topf mit Thermostat, Ankerrührer, Rückflußkühler, Zulaufgefäßen, Thermometer und Stickstoffeinleitung werden vorgelegt :

1050 Teile Wasser

13,5 Teile einer 35 %igen wäßrigen Lösung des Natriumsalzes eines Schwefelsäurehalbesters eines mit 20 Mol Ethylenoxid umgesetzten p-Nonylphenols (anionischer Emulgator)

45 Teile einer 20 %igen Lösung eines mit 25 Mol Ethylenoxid (nicht ionischer Emulgator) umgesetzten p-Nonylphenols.

Als Zulauf I dient eine Mischung aus :

504 Teilen Wasser
66 Teilen einer 35 %igen Lösung des oben angegebenen anionischen Emulgators
880 Teilen Methylmethacrylat
850 Teilen n-Butylacrylat
95 Teilen Acrolein
20 Teilen Acrylsäure
30 Teilen Acrylamid

Im Zulaufgefäß II wird eine Lösung von 7,5 Teilen Kaliumpersulfat in 180 Teilen Wasser bereitet.

Der Reaktor wird gründlich mit Stickstoff gespült. Dann werden 10 % des Zulaufs I zur Vorlage gegeben und die Mischung auf 90 °C erwärmt. Es werden 10 % des Zulaufs II in einem Guß in den Reaktor gegeben und dann die Zuläufe I und II gleichmäßig nebeneinander in 3 bzw. 3,5 Stunden dem Reaktor zugefahren. Nach Zulaufende wird die Temperatur noch 1 1/2 Studen bei 90 °C gehalten, der Reaktor dann auf Raumtemperatur abgekühlt, der pH-Wert der Dispersion mit Ammoniakwasser auf bis 7 bis 8 gestellt, 35 Teile Adipinsäuredihydrazid und 20 Teile einer 1 %igen wäßrigen Zinksulfatlösung zugegeben und etwa 1 Stunde nachgerührt.

Man erhält eine feinteilige Dispersion des LD-Werts 90 % mit einem Feststoffgehalt von 48 %.

b) Herstellung einer Überzugsmasse

Unter Verwendung der mit Wasser auf einen Feststoffgehalt von 45 % eingestellten Bindemitteldispersion gemäß a) wird mittels eines Dissolvers eine Überzugsmasse nach folgender Rezeptur hergestellt :

| | |
|---|---|
| Wasser | 16,7 Teile |
| handelsübliches Dispergier- und Stabilisierungsmittel | 0,5 Teile |
| Titandioxid (Rutil-Typ) | 20,0 Teile |
| Talkum | 12,5 Teile |
| Bindemitteldispersion | 50,0 Teile |
| Silikonentschäumer | 0,3 Teile |

Die Überzugsmasse weist eine Pigmentvolumenkonzentration von 29 auf.

c) Applikation und Prüfung

Die Überzugsmasse wird mittels einer Rolle in zwei aufeinanderfolgenden Arbeitsgängen auf Beton aufgebracht, wobei jeweils ca. 300 g/m$^2$ aufgetragen werden. Es ergibt sich ein weißer, deckender Überzug mit einer Trockenfilmdicke von 0,25 mm.

Nach der von Engelfried beschriebenen Methode werden die Diffusionswiderstandszahl $\mu$ und der Diffusionswiderstand W für Kohlendioxid und in analoger Weise für Wasserdampf bestimmt (Engelfried R., defazet 31, Heft 9 (1977) Seite 378 f).

Es ergeben sich folgende Werte :

$\mu_{CO_2}$ = 5 790 000
$W_{CO_2}$ = 1 447 m
$\mu_{H_2O}$ = 6 850
$W_{H_2O}$ = 1,71 m

Beispiel 2

a) Herstellung eines Bindemittels

Man verfährt wie im Beispiel 1 a) angegeben, verwendet aber als Zulauf I während der ersten 1 1/2 Stunde eine Mischung aus :

252 Teilen Wasser
33 Teilen einer 35 %igen Lösung des in Beispiel 1 angegebenen anionischen Emulgators
15 Teilen Acrylamid
10 Teilen Acrylsäure
430 Teilen Methylmethacrylat
420 Teilen n-Butylacrylat
130 Teilen Acrolein,

als Zulauf II während der zweiten 1 1/2 Stunden eine Mischung aus :

252 Teilen Wasser
33 Teilen einer 35 %igen Lösung des in Beispiel 1 angegebenen anionischen Emulgators
15 Teilen Acrylamid
10 Teilen Acrylsäure
430 Teilen Methylmethacrylat
420 Teilen n-Butylacrylat

Die Dispersion, deren pH-Wert durch Zugabe von Ammoniakwasser auf 7 bis 8 gestellt ist, fügt man 35 Teile Bernsteinsäuredihydrazid und 20 Teile 1 %ige wäßrige Mangansulfatlösung zu. Man erhält eine feinteilige Dispersion (LD-Wert ≃ 90).

b) In gleicher Weise wie im Beispiel 1 b) wird unter Verwendung der obigen Bindemitteldispersion eine Überzugsmasse nach folgender Rezeptur hergestellt :

| | |
|---|---|
| Wasser | 9,5 Teile |
| handelsübliches Dispergier- und Stabilisierungsmittel | 0,3 Teile |
| Titandioxid | 18,0 Teile |
| Glimmer | 7,0 Teile |
| Bindemitteldispersion | 65,0 Teile |
| Mineralölentschäumer | 0,3 Teile |

Die Überzugsmasse weist eine Pigmentvolumenkonzentration von 20 auf.

c) Applikation und Prüfung

Die Überzugsmasse wird in 2 Arbeitsgängen in einer Auftragsstärke von je 250 g/m$^2$ auf Beton aufgebracht. Es ergibt sich ein weißer, deckender Überzug mit einer Trockenfilmdicke von 0,2 mm.

Die in gleicher Weise wie im Beispiel 1 c) durchgeführte Prüfung ergibt folgende Werte :

$\mu_{CO_2}$ = 8 750 000
$W_{CO_2}$ = 1 750 m
$\mu_{H_2O}$ = 8 800
$W_{H_2O}$ = 1,76 m

Beispiel 3

a) Es wird das Bindemittel gemäß Beispiel 1 a) verwendet.

b) Es wird eine Überzugsmasse nach folgender Rezeptur hergestellt :

| | |
|---|---|
| Wasser | 11,5 Teile |
| handelsübliches Dispergier- und Stabilisierungsmittel | 0,5 Teile |
| Titandioxid | 5,0 Teile |
| Schwerspat | 5,0 Teile |
| Talkum | 7,5 Teile |
| Bindemitteldispersion | 50,0 Teile |
| Silikonentschäumer | 0,5 Teile |

Die Pigmentvolumenkonzentration dieser Beschichtungsmasse beträgt 40,0.

c) Die Beschichtungsmasse wird in einer Auftragsstärke von je 500 g/m$^2$ 2 mal auf Beton aufgebracht.

Es resultiert ein Überzug mit einer Trockenfilmdicke von 0,4 mm.

Die Prüfung ergibt folgende Werte :

$\mu_{CO_2}$ = 2 140 000

$W_{CO_2}$ = 856 m

$\mu_{H_2O}$ = 4 263

$W_{H_2O}$ = 1,70 m

Die obigen Prüfungsergebnisse zeigen, daß bei dem erfindungsgemäßen Verfahren Werte der Diffusionswiderstandszahl $\mu$ für Kohlendioxid von 2 140 000 bis 8 750 000 erreicht werden, wobei sich die untere Grenze bei einer Pigmentvolumenkonzentration von 40 ergibt, also in einem Bereich, in dem keine optimalen Verhältnisse mehr vorligen. Demgegenüber betragen die von Engelfried für 2 handelsübliche Acrylatdispersionen ermittelten Werte nur 1 160 bzw. 4 500 (Engelfried a.a.O.). Das erfindungsgemäße Verfahren liefert also Ergebnisse, die wesentlich günstiger sind als der Stand der Technik. Die ermittelten Werte der Diffusionswiderstandszahl für Wasserdampf zeigen weiterhin, daß ein wesentlicher mit der Verwendung von lösungsmittelhaltigen Beschichtungsmassen, beispielsweise Chlorkautschuklösungen, verbundener Nachteil, nämlich die Verhinderung der Wasserdampfdiffusion aus dem Beton heraus, hier nicht auftritt.

**Patentansprüche**

1. Verfahren zur Verzögerung der Carbonatisation von Stahlbeton durch Aufbringung einer Überzugsmasse auf der Basis von Acrylatpolymerisaten, die zu einem Überzug mit einem hohen Diffusionswiderstand für Kohlendioxid aushärtet, auf die Oberfläche des Stahlbetons, dadurch gekennzeichnet, daß eine Überzugsmasse aufgebracht wird, die als Bindemittel

A) eine 20 bis 70 %ige wäßrige Dispersion eines Copolymerisats A einer Glastemperatur von 0 bis 50 °C aus

a) Methacrylsäuremethylester, Styrol, Vinylacetat, tert.-Butylacrylat und/oder Vinylchlorid und gegebenenfalls zusätzlich Acrylnitril und

b) (Meth)acrylsäureestern 2 bis 8 C-Atome enthaltender Alkanole und/oder Vinylpropionat, die

c) 0,5-10 % ihres Gewichtes an 3 bis 5 C-Atome enthaltenden Mono- und/oder Dicarbonsäuren und/oder deren gegebenenfalls an den Stickstoffatomen durch 1 bis 4 C-Atome enthaltende Alkyl- und/oder Alkylolreste substituierte Amide und

d) 0,5-10 % ihres Gewichts an Carbonylgruppen aufweisenden Monomeren einpolymerisiert enthalten,

B) je Mol in den Copolymerisaten A enthaltenen Carbonylgruppen 0,05-1 Mol wasserlösliche aliphatische Dihydrazin-Verbindungen und

C) je Mol Dihydrazin-Verbindung 0,000 2 bis 0,02 Mol wasserlösliche Zink-, Mangan-, Cobalt- und/oder Bleisalze

enthält.

2. Verfahren nach Anspruch 1, dadurch gekennzeichnet, daß die Überzugsmasse zusätzlich Pigmente und/oder Füllstoffe im Verhältnis des Pigmentvolumens und/oder Füllstoffvolumens zum Gesamtvolumen aller nicht flüchtigen Bestandteile der Überzugsmasse von 0,1 bis 40 enthält.

3. Verfahren nach Anspruch 2, dadurch gekennzeichnet, daß die Füllstoffe mindestens teilweise eine blättchenförmige Struktur besitzen.

4. Verfahren nach Anspruch 2 und 3, dadurch gekennzeichnet, daß die Überzugsmasse 0 bis 100 Gew.-% Pigmente und 100 bis 0 Gew.-% blättchenförmige Füllstoffe, bezogen auf die Summe der Pigmente und Füllstoffe, enthält.

5. Verfahren nach Anspruch 1 bis 4, dadurch gekennzeichnet, daß die Überzugsmasse Entschäumer, Verdickungsmittel, Stabilisierungsmittel, Dispergierhilfsmittel und andere bekannte Hilfsstoffe enthält, wobei die Feststoffsumme aller Hilfsstoffe 0,1 bis 1 Gew.-% bezogen auf die Überzugsmasse beträgt.

6. Verfahren nach Anspruch 1 bis 5, dadurch gekennzeichnet, daß das Copolymerisat A eine durchschnittliche Teilchengröße von 0,1 bis 0,3 µm aufweist.

## Claims

1. Process for delaying the carbonation of reinforced concrete by applying a coating composition, which is based on acrylate polymers and which cures to give a coating having a high diffusion resistance for carbon dioxide, to the surface of the reinforced concrete, characterised in that a coating composition is applied which, as the binder, contains

A) a 20 to 70 % aqueous dispersion of a copolymer A having a glass transition temperature from 0 to 50 °C and consisting of

a) methyl methacrylate, styrene, vinyl acetate, tert.-butyl acrylate and/or vinyl chloride and, if appropriate, additionally acrylonitrile and

b) (meth)acrylates of alkanols having 2 to 8 C atoms and/or vinyl propionate, which

c) contain 0.5-10 % of their weight of copolymerised monocarboxylic and/or dicarboxylic acids containing 3 to 5 C atoms and/or amides thereof, which may be substituted on the nitrogen atoms by alkyl and/or alkylol radicals containing 1 to 4 C atoms, and

d) 0.5-10 % of their weight of copolymerised monomers containing carbonyl groups,

B) 0.05-1 mol of water-soluble aliphatic dihydrazine compounds per mol of carbonyl groups contained in the copolymers A and

C) 0.000 2 to 0.02 mol of water-soluble zinc, manganese, cobalt and/or lead salts per mol of dihydrazine compound.

2. Process according to Claim 1, characterised in that the coating composition additionally contains pigments and/or fillers in a ratio of the pigment volume and/or filler volume to the total volume of all nonvolatile constituents of the coating composition of 0.1 to 40.

3. Process according to Claim 2, characterised in that the fillers have an at least partially lamellar structure.

4. Process according to Claims 2 and 3, characterised in that the coating composition contains 0 to 100 % by weight of pigments and 100 to 0 % by weight of lamellar fillers, relative to the sum of the pigments and fillers.

5. Process according to Claims 1 to 4, characterised in that the coating composition contains antifoams, thickeners, stabilisers, dispersing aids and other known auxiliaries, the sum of all solid auxiliaries being 0.1 to 1 % by weight, relative to the coating composition.

6. Process according to Claims 1 to 5, characterised in that the copolymer A has an average particle size of 0.1 to 0.3 µm.

## Revendications

1. Procédé pour retarder la carbonatation du béton armé par application sur la surface du béton armé, d'une masse de revêtement à base de produits de polymérisation d'acrylate qui durcit en donnant un revêtement présentant une grande résistance à la diffusion de dioxyde de carbone, caractérisé par le fait que l'on applique une masse de revêtement qui contient comme liant :

A) une dispersion aqueuse à 20 à 70 % d'un produit de copolymérisation A ayant une température de transition vitreuse de 0 à 50 °C, formé

a) de méthacrylate de méthyle, de styrène, d'acétate de vinyle, d'acrylate de butyle tertiaire et/ou de chlorure de vinyle et éventuellement en outre, d'acrylonitrile et

b) d'esters d'acide (méth)acrylique d'alcanols contenant 2 à 8 atomes de carbone, et/ou de propionate de vinyle, qui contiennent, à l'état incorporé par polymérisation

c) 0,5 à 10 % de leur poids d'acides mono- et/ou dicarboxyliques contenant 3 à 5 atomes de carbone et/ou de leurs amides éventuellement substituées sur les atomes d'azote par les radicaux alkyle et/ou alkylol contenant 1 à 4 atomes de carbone et

d) 0,5 à 10 % de leur poids de monomères présentant des groupes carbonyle,

B) par mole de groupes carbonyle contenus dans les produits de copolymérisation (A), 0,05 à 1 mole de dérivés aliphatiques de dihydrazine hydrosolubles et

C) par mole de dérivé de dihydrazine, 0,000 2 à 0,02 mole de sels hydrosolubles de zinc, de manganèse, de cobalt et/ou de plomb.

2. Procédé selon la revendication 1, caractérisé par le fait que la masse de revêtement contient en outre des pigments et/ou charges, en un rapport du volume de pigment et/ou du volume de charge au

volume total de tous les constituants non volatils de la masse de revêtement, compris entre 0,1 et 40.

3. Procédé selon la revendication 2, caractérisé par le fait que les charges présentent au moins partiellement une structure lamellaire.

4. Procédé selon les revendications 2 et 3, caractérisé par le fait que la masse de revêtement contient 0 à 100 % en poids de pigments et 100 à 0 % en poids de charges lamellaires, relativement au total des pigments et charges.

5. Procédé selon les revendications 1 à 4, caractérisé par le fait que la masse de revêtement contient des agents antimousse, épaississants, stabilisants, adjuvants de dispersion et autres adjuvants connus, le total en solides de tous les adjuvants étant de 0,1 à 1 % en poids relativement à la masse de revêtement.

6. Procédé selon les revendications 1 à 5, caractérisé par le fait que le produit de copolymérisation A présente une grosseur moyenne de particules de 0,1 à 0,3 μm.